# EUROPÄISCHE PATENTSCHRIFT

(11) **EP 2 836 418 B1**
(45) Veröffentlichungstag und Bekanntmachung des Hinweises auf die Patenterteilung: **02.12.2015**
(21) Anmeldenummer: 13715138.7
(22) Anmeldetag: 30.03.2013
(51) Int. Cl.: B62D 21/03, B62D 21/11, B60G 7/02

(54) **VORRICHTUNG ZUM VERSTÄRKEN EINES TRAGENDEN HILFSRAHMENS**
DEVICE FOR REINFORCING A SUPPORTING SUB-FRAME
DISPOSITIF POUR RENFORCER UN CHÂSSIS AUXILIAIRE PORTEUR

(30) Priorität: 12.04.2012 DE 102012007327
(43) Veröffentlichungstag der Anmeldung: 18.02.2015
(73) Patentinhaber: Audi AG, 85045 Ingolstadt (DE)
(72) Erfinder: MOHRLOCK, Dominik, 85114 Buxheim (DE)
(74) Vertreter: Reichert, Thomas Klaus
(86) Internationale Anmeldenummer: PCT/EP2013/000960
(87) Internationale Veröffentlichungsnummer: WO 2013/152833

(56) Entgegenhaltungen:
- EP-A1- 0 307 547
- EP-A2- 1 035 003
- EP-A2- 2 093 131
- WO-A1-2008/053034
- DE-A1-102009 020 305
- JP-A- 2004 276 735
- US-A1- 2005 140 112

## Beschreibung

Die vorliegende Erfindung betrifft eine Vorrichtung zum Verstärken eines tragenden Hilfsrahmens für Kraftfahrzeuge gemäß dem Oberbegriff des Patentanspruchs 1.

Die EP1 035 003 A2, JP 2004 276 735 A, EP 0 307 547 A1, US 2005/0140112 A1 und WO 2008/053034 A1 offenbaren relevante Hilfsrahmen.

Bei einer 5-Lenkerachse sind die oberen Querlenker meist vor der Feder und dem Dämpfer oder dem Federbein. Durch eine Anordnung des hinteren oberen Führungslenkers bzw. Querlenkers hinter der Feder oder dem Dämpfer bzw. Federbein zeigt dieser Lenker weit nach hinten. Dadurch muss entweder der Hilfsrahmen sehr lang ausgeführt werden, unter dem Querlenker verlaufen und ein Bock zum Karosserielängsträger realisiert werden oder der Hilfsrahmen einen starken Bogen im hinteren Bereich machen.

An derartigen Hilfsrahmen sind in der Regel sowohl Antriebsaggregate des Kraftfahrzeugs gelagert als auch Lenker der Radaufhängungen angelenkt, so dass diese in einer kompletten Montageeinheit verbaut werden können. Die Hilfsrahmen sind zumeist in einer Vierpunktaufhängung mit Längsträgern und/oder Querträgern des Aufbaus des Kraftfahrzeugs über schwingungsdämpfende Hilfsrahmenlager verbunden. Daraus resultierend müssen die statisch und dynamisch wirkenden Kräfte und Momente über den Hilfsrahmen in den Aufbau des Kraftfahrzeugs eingeleitet werden, wozu der Hilfsrahmen entsprechend widerstandsfähig konstruiert sein muss. Aus baulichen und konstruktiven Gründen kann es erforderlich sein, dass die Längsholme des Hilfsrahmens zum Beispiel zum erforderlichen Freigang von Lenkern oder zur Realisierung definierter Lenkerlängen gekrümmt ausgeführt sind, woraus sich insbesondere im Krümmungsbereich Schwachstellen ergeben können.

Aufgabe der Erfindung ist es, eine Vorrichtung der gattungsgemäßen Art vorzuschlagen, mittels der mit geringem Mehraufwand eine wirkungsvolle, örtliche Verstärkung eines Hilfsrahmens erzielbar ist.

Die Aufgabe ist durch die Merkmale des Patentanspruchs 1 gelöst. Vorteilhafte Weiterbildungen und Ausgestaltungen der Erfindung sind Gegenstand der Unteransprüche.

Erfindungsgemäß wird vorgeschlagen, dass die Aufnahmen für die Lenker der Radaufhängung als zwei Konsolen ausgebildet sind, von denen die eine an dem längs verlaufenden Abschnitt der Längsholme und die andere an dem quer verlaufendem Abschnitt abgestützt ist, wobei deren parallel zueinander ausgerichtete Basiswände mit der Lagerhülse des Gummi-Metall-Hülsenlagers über eine Befestigungsschraube fest verbunden sind. Die vorgeschlagene Ausführung bildet praktisch eine Diagonalabstützung des Krümmungsbereichs bzw. einen die Krümmung überbrückenden Lastpfad, in den die Befestigungsschrauben und die den Lagerkern bildende Lagerhülse eingeschlossen sind. Die vorgeschlagene, örtliche Verstärkung erspart quasi eine gegebenenfalls ansonsten erforderliche, generelle Verstärkung des Hilfsrahmens zum Beispiel durch Materialdickenerhöhung oder Querschnittsvergrößerung.

Zur Erzielung eines robusten und steifen Bauteileverbunds können die Basiswände der Konsolen die Längsholme halbkreisförmig umschließen und die Basiswände und deren Seitenwände mit den Längsholmen verschweißt sein.

Des Weiteren wird vorgeschlagen, dass die Basiswand der Konsolen des quer verlaufenden Abschnitts der Längsholme jeweils einen in Kraftwirkungslinie der Befestigungsschraube abragenden, unmittelbar am quer verlaufenden Abschnitt der Längsholme abgestützten Kragen aufweist, wobei durch die direkte Abstützung in der Kraftwirkungslinie die Konsolen an sich relativ gewichtsgünstig ausgeführt sein können.

Zudem können die mit dem längsverlaufenden Abschnitt der Längsholme verbundenen Konsolen becherförmig mit einer an die beiden Seitenwände und an die Basiswand anschließenden Deckwand ausgeführt sein, um so ein in sich stabiles, gewichtsgünstiges Bauteil zu bilden.

Eine zusätzliche Aussteifung des Krümmungsabschnitts der Längsholme mit baulich und fertigungstechnisch einfachen Mitteln wird dadurch erzielt, dass zwischen den beiden Basiswänden der Konsolen ein bzw. zwei an den Basiswänden und gegebenenfalls an dem Längsholm befestigte, innerhalb der Anlenkstelle positionierte Versteifungsbleche an der Unterseite- und/oder Oberseite vorgesehen ist.

Schließlich können an dem Versteifungsblech rechtwinkelig abgekantete Flansche ausgebildet sein, die mit den Basiswänden und gegebenenfalls den Längsholmen zum Beispiel durch einfache Punktschweißverbindungen fest verbunden sind.

Ein Ausführungsbeispiel der Erfindung ist im Folgenden anhand der beigefügten, schematischen Zeichnung näher erläutert. Es zeigen:
- Fig. 1: eine Draufsicht auf eine linksseitige Radaufhängung eines Kraftfahrzeugs und auf einen nur teilweise dargestellten Hilfsrahmen mit einem gekrümmten Längsholm und Querholmen, sowie mit einer in einem Krümmungsbereich des Längsholms vorgesehenen Verstärkung mittels zweier Konsolen und einem Gummi-Metall-Hülsenlager eines angelenkten Lenkers der Radaufhängung; und
- Fig. 2: in vergrößerter Darstellung die die Verstärkung des Längsholms bildenden Konsolen mit Anlenkung des Lenkers über das Gummi-Metall-Hülsenlager und dem zusätzlichen Versteifungsblech.

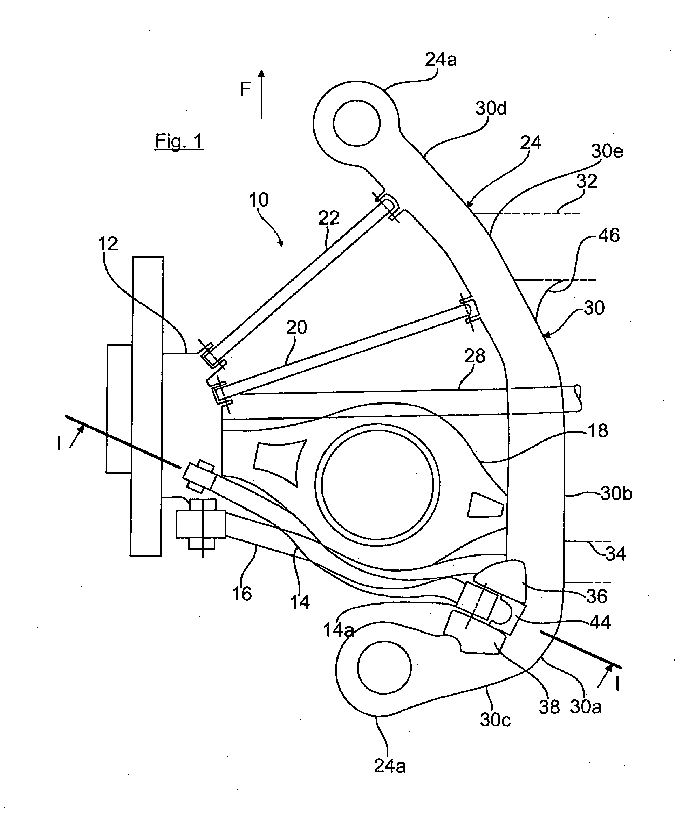

Die Fig. 1 zeigt in Draufsicht eine linksseitige, hintere Radaufhängung 10 eines Kraftfahrzeugs, die jedoch nur soweit beschrieben ist, als dies für das Verständnis der Erfindung erforderlich ist.

Der Radträger 12 der Radaufhängung 10 ist an einer 5-Lenkerachse gehaltert, bei der der Radträger 12 über fünf, räumlich aufgeteilte Lenker 14, 16, 18, 20, 22 geführt ist, die andererseits an einem nur teilweise dargestellten Hilfsrahmen 24 angelenkt sind. Ferner ist eine das Hinterrad antreibende Gelenkwelle 28 eines Antriebsaggregats (nicht dargestellt) ersichtlich.

Der Hilfsrahmen 24 setzt sich aus zwei Längsholmen 30 (es ist nur der linksseitige Längsholm 30 dargestellt, der Rechtsseitige ist im Wesentlichen spiegelbildlich gleich) und zwei Querholmen 32, 34 zusammen und ist in einer Vierpunktlagerung über Lageraufnahmen 24a mit dem Aufbau des Kraftfahrzeugs (nicht dargestellt), zum Beispiel mit Längsträgern, über gummielastische Hilfsrahmenlager verbunden. An dem Hilfsrahmen 24 ist auch das Antriebsaggregat (zum Beispiel ein Hinterachsdifferenzial, nicht ersichtlich) gelagert.

Aus konstruktiven und baulichen Gründen sind die Längsholme 30 des Hilfsrahmen 24 wie ersichtlich gekrümmt ausgeführt, mit u.a. einer etwa 90 Grad einschließenden Krümmung 30a.

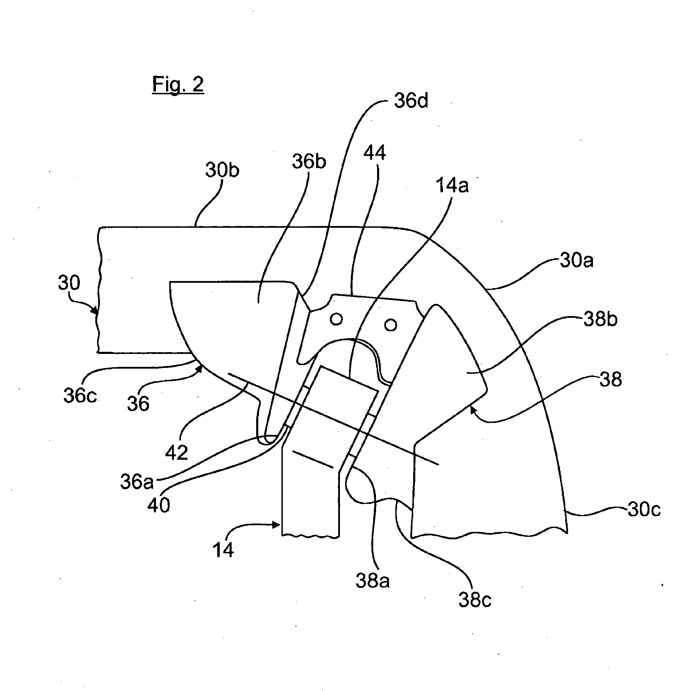

Die besagten Lenker 16, 18, 20, 22 sind in üblicher Weise über Lageraufnahmen mit Gummi-Metall-Hülsenlagern und entsprechend an dem Längsholm 30 angeordneten Konsolen am Längsholm 30 angelenkt, während die Anlenkung des in der Fahrtrichtung F hinteren, oberen Lenkers 14 im Bereich der Krümmung 30a wie folgt ausgeführt ist (Fig.2):
An dem Längsholm 30 etwa kreisförmigen Querschnitts sind zwei Konsolen 36, 38 befestigt, von denen die eine Konsole 36 an dem Längsabschnitt 30b des Längsholms 30 und die andere Konsole 38 an dem etwa quer verlaufenden Abschnitt 30c des Längsholms 30 durch Schweißverbindungen befestigt sind.

Die parallel zueinander ausgerichteten, eine Gabel bildenden Basiswände 36a, 38a der Konsolen 36, 38 schließen zwischen sich die Lagerhülse 40 eines nicht weiter dargestellten Gummi-Metall-Hülsenlagers ein, das in das Lagerauge 14a des Lenkers 14 in bekannter Weise eingesetzt ist. Die zwischen den Basiswänden 36a, 38a der Konsolen 36, 38 gelagerte Lagerhülse 40 definiert eine strichpunktiert dargestellte Schwenkachse 42, um die der Lenker 14 schwenken kann.

An die Basiswand 36a der becherförmig gestalteten Konsole 36 schließen Seitenwände 36b (es ist nur die obere Seitenwand 36b ersichtlich) und eine Deckwand 36c an. Ferner sind die Stirnseiten 36d der Basiswand 36a halbkreisförmig ausgeführt und umschließen den Längsholm 30 teilweise, wobei die Randbereiche der Seitenwände 36b, der Basiswand 36a und der Deckwand 36c mit dem Längsholm 30b entsprechend verschweißt sind.

Die ebenfalls becherförmige Konsole 38 weist ebenfalls zwei an die Basiswand 38a anschließende Seitenwände 38b und eine halbkreisförmige Stirnseite (nicht ersichtlich) der Basiswand 38a auf, die analog zur Konsole 36 den Abschnitt 30c des Längsholms 30 umschließen und mit ihren Randbereichen entsprechend mit dem Längsholm 30 verschweißt sind.

Ferner ist an der Konsole 38 ein in strichpunktiert angedeuteter Kraftwirkungslinie 42 verlaufender Kragen 38c angeformt, der sich wie ersichtlich an dem Abschnitt 30c des Längsholms 30 abstützt und mit diesem verschweißt ist.

Zwischen den Basiswänden 36a, 38a der Konsolen 36, 38 ist innerhalb des Lagerauges 14a des Lenkers 14 liegend ein Versteifungsblech 44 eingesetzt, dessen den Basiswänden 36a, 38a zugewandte Randbereiche und dessen dem Krümmungsbereich 30a des Längsholms zugewandter Randbereich durch entsprechende Schweißverbindungen fest mit den Basiswänden 36a, 38a und dem Längsholm 30 verbunden sind.

Die besagten Randbereiche des Versteifungsblechs 44 können gegebenenfalls durch um 90 Grad abgewinkelte Flansche (nicht dargestellt) gebildet sein, die im Punktschweißverfahren mit den angrenzenden Konsolen 36, 38 und dem Längsholm 30 fest verbunden sind.

Die beiden Konsolen 36, 38 bilden in Verbindung mit der Lagerhülse 40 und der Befestigungsschraube einen zusätzlichen Lastpfad (Kraftwirkungslinie 42), der die Längsholme 30 im Bereich der Krümmung 30a in nicht unbeträchtlichem Maße aussteift. Zusätzlich kann das innere Versteifungsblech 44 in der dargestellten oder einer ähnlichen Form verwendet sein. Alternativ zu der gezeigten Ausführungsvariante ist es auch möglich, das Versteifungsblech 44 auch oben und/oder unten anzuordnen.

Die Erfindung ist nicht auf das dargestellte Ausführungsbeispiel beschränkt. Gegebenenfalls können die Längsholme 30 des Hilfsrahmens 24 auch eine andere Querschnittsform aufweisen, zum Beispiel oval oder als Vierkant. Als Werkstoffe können Stahl oder Leichtmetall verwendet sein.

Die Längsholme 30 können wie aus der Fig. 1 ersichtlich ist auch so konzipiert sein, dass ein vorderer Abschnitt 30d der Längsholme 30 unmittelbar in den Querholm 32 übergeht und die weiterführenden Abschnitte der Längsholme 30 an den Übergangsbereich 30e angesetzt bzw. angeschweißt sind. In diesem Bereich können auch aussteifende Knotenblech 46 wie dargestellt eingesetzt sein.

## Patentansprüche

1. Vorrichtung zum Verstärken eines tragenden Hilfsrahmens für Kraftfahrzeuge, der sich aus zwei Längsholmen (30) und zumindest einem Querholm (32, 34) zusammensetzt, wobei an den Längsholmen (30) über radial abragende, feste Aufnahmen (36, 38) die Lenker (14, 16, 20, 22) beidseitiger Radaufhängungen über Gummi-Metall-Hülsenlager angelenkt sind und wobei die Längsholme (30) zumindest in einem Anlenkbereich eines Lenkers (14) eine etwa 90°-Krümmung mit einem längs verlaufenden Abschnitt (30b) und einem quer verlaufenden Abschnitt (30c) aufweisen, **dadurch gekennzeichnet, dass** die Aufnahmen (36, 38) als zwei Konsolen ausgebildet sind, von denen die eine an dem längs verlaufenden Abschnitt (30b) der Längsholme (30) und die andere an dem quer verlaufenden Abschnitt (30c) abgestützt ist, und dass die Konsolen eine Diagonalabstützung des Krümmungsbereiches mit einem die 90°-Krümmung überbrückenden Lastpfad zwischen dem längsverlaufenden Abschnitt (30b) und dem querverlaufenden Abschnitt (30c) bilden.

2. Vorrichtung nach Anspruch 1, **dadurch gekennzeichnet, dass** mit den am längs verlaufenden Abschnitt (30b) und am quer verlaufenden Abschnitt (30c) abgestützten Konsolen (36, 38) der quer verlaufende Abschnitt (30c) des Längsholms (30) versteift wird, und/oder ein zusätzlicher Lastpfad bzw. eine zusätzliche Abstützung mit der Innenbuchse (40) des Gummi-Metall-Hülsenlagers bereitgestellt wird.

3. Vorrichtung nach Anspruch 1 oder 2, **dadurch gekennzeichnet, dass** die Konsolen (36, 38) parallel zueinander ausgerichtete Basiswände (36a, 38a) aufweisen, die mit der Lagerhülse (40) des Gummi-Metall-Hülsenlagers über eine Befestigungsschraube (42) fest verbunden sind.

4. Vorrichtung nach Anspruch 1, 2 oder 3, **dadurch gekennzeichnet, dass** die Basiswände (36a, 38a) der Konsolen (36, 38) die Längsholme (30) halbkreisförmig umschließen, und/oder dass die Basiswände (36a, 38a) und deren Seitenwände (36b, 38b) mit den Längsholmen (30) verschweißt sind.

5. Vorrichtung nach einem der vorhergehenden Ansprüche, **dadurch gekennzeichnet, dass** die Basiswand (38a) der Konsolen (38) des quer verlaufenden Abschnitts (30c) der Längsholme (30) jeweils einen in Kraftwirkungslinie (42) der Befestigungsschraube abragenden, unmittelbar am quer verlaufenden Abschnitt (30c) der Längsholme (30) abgestützten Kragen (38c) aufweist.

6. Vorrichtung nach einem der vorhergehenden Ansprüche, **dadurch gekennzeichnet, dass** die mit dem längsverlaufenden Abschnitt (30b) der Längsholme (30) verbundenen Konsolen (36) und/oder die Konsolen (38) becherförmig mit einer an die beiden Seitenwände (36b) und an die Basiswand (36a) anschließenden Deckwand (36c) ausgeführt sind.

7. Vorrichtung nach einem der vorhergehenden Ansprüche, **dadurch gekennzeichnet, dass** zwischen beiden Basiswänden (36a, 38a) der Konsolen (36, 38) ein oder zwei, an den Basiswänden (36a, 38a) und gegebenenfalls an dem Längsholm (30) befestigte, innerhalb der Anlenkstelle (14a) positionierte Versteifungsbleche (44) vorgesehen sind.

8. Vorrichtung nach Anspruch 7, **dadurch gekennzeichnet, dass** an dem Versteifungsblech (44) rechtwinkelig abgekantete Flansche ausgebildet sind, die mit den Basiswänden (36a, 38a) und gegebenenfalls den Längsholmen (30) verschweißt sind.

## Claims

1. Device for reinforcing a supporting subframe for motor vehicles which is composed of two longitudinal beams (30) and at least one transverse beam (32, 34), the guide rods (14, 16, 20, 22) of wheel suspensions on both sides being hinged onto the longitudinal beams (30) by means of radially projecting, fixed mounts (36, 38) via rubber metal sleeve bearings and the longitudinal beams (30) comprising at least in a hinge area of a guide rod (14) an approximately 90° curvature with a longitudinal section (30b) and a transversely running section (30c), **characterised in that** the mounts (36, 38) are designed as two consoles, one of which is supported on the longitudinally running section (30b) of the longitudinal beams (30) and the other of which is supported on the transversely running section (30c) and **in that** the consoles form a diagonal support of the curved area with a load path bridging the 90° curvature between the longitudinally running section (30b) and the transversely running section (30c).

2. Device according to claim 1, **characterised in that** the transversely running section (30c) of the longitudinal beam (30) is reinforced by the consoles (36, 38) supported on the longitudinally running section (30b) and on the transversely running section (30c), and/or an additional load path or an additional support is provided with the inner bush (40) of the rubber metal sleeve bearing.

3. Device according to either claim 1 or claim 2, **characterised in that** the consoles (36, 38) comprise parallel aligned base walls (36a, 38a) which are securely connected to the bearing sleeve (40) of the rubber metal sleeve bearing by means of a fastening screw (42).

4. Device according to claim 1, 2 or 3, **characterised in that** the base walls (36a, 38a) of the consoles (36, 38) surround the longitudinal beams (30) in a semi-circular manner, and/or **in that** the base walls (36a, 38a) and their side walls (36b, 38b) are welded to the longitudinal beams (30).

5. Device according to any one of the preceding claims, **characterised in that** the base wall (38a) of the consoles (38) of the transversely running section (30c) of the longitudinal beams (30) comprises a collar (38c) which projects in the line of force (42) of the fastening screw and is supported directly on the transversely running section (30c) of the longitudinal beams (30).

6. Device according to any one of the preceding claims, **characterised in that** the consoles (36) and/or consoles (38) connected to the longitudinally running section (30b) of the longitudinal beams (30) are designed to be cup-like with a cover wall (36c) connected to the two side walls (36b) and the base wall (36a).

7. Device according to any one of the preceding claims, **characterised in that** between the two base walls (36a, 38a) of the consoles (36, 38) one or two reinforcing sheets (44) are provided which are secured onto the base walls (36a, 38a) and if necessary onto the longitudinal beam (30) and are positioned inside the hinge point (14a).

8. Device according to claim 7, **characterised in that** right-angled flanges are formed on the reinforcing sheet (44), which flanges are welded to the base walls (36a, 38a) and if necessary to the longitudinal beams (30).

## Revendications

1. Dispositif pour renforcer un châssis auxiliaire porteur pour des véhicules automobiles, lequel châssis auxiliaire se compose de deux longerons (30) et d'au moins une traverse (32, 34), les bras (14, 16, 20, 22) de suspensions de roue des deux côtés étant articulés par l'intermédiaire de paliers caoutchouc-métal sur les longerons (30) via des logements (36, 38) fixes dépassant de façon radiale et les longerons (30) ayant au moins dans une zone d'articulation d'un bras (14) une courbure à peu près à 90° avec un tronçon s'étendant longitudinalement (30b) et avec un tronçon s'étendant transversalement (30c), **caractérisé en ce que** les logements (36, 38) sont conçus comme deux consoles dont l'une est appuyée au tronçon s'étendant longitudinalement (30b) des longerons (30) et dont l'autre est appuyée au tronçon s'étendant transversalement (30c) et **en ce que** les consoles forment un soutien en diagonale de la zone de courbure avec une ligne de charge pontant la courbure à 90° entre le tronçon s'étendant longitudinalement (30b) et le tronçon s'étendant transversalement (30c).

2. Dispositif selon la revendication 1, **caractérisé en ce que** le tronçon s'étendant transversalement (30c) du longeron (30) est renforcé avec les consoles (36, 38) appuyées au tronçon s'étendant longitudinalement (30b) et au tronçon s'étendant transversalement (30c) et/ou **en ce qu'**une ligne de charge supplémentaire respectivement un soutien supplémentaire est fourni par le coussinet intérieur (40) du palier caoutchouc-métal.

3. Dispositif selon la revendication 1 ou 2, **caractérisé en ce que** les consoles (36, 38) comportent des parois de base (36a, 38a) qui sont orientées parallèlement l'une à l'autre et qui sont assemblées de manière fixe au coussinet de palier (40) du palier caoutchouc-métal par l'intermédiaire d'une vis de fixation (42).

4. Dispositif selon la revendication 1, 2 ou 3, **caractérisé en ce que** les parois de base (36a, 38a) des consoles (36, 38) enveloppent en demi-cercle les longerons (30) et/ou **en ce que** les parois de base (36a, 38a) et leurs parois latérales (36b, 38b) sont soudées aux longerons (30).

5. Dispositif selon l'une des revendications précédentes, **caractérisé en ce que** la paroi de base (38a) des consoles (38) du tronçon s'étendant transversalement (30c) du longeron (30) comporte à chaque fois un rebord (38c) qui dépasse dans la ligne d'action des forces (42) de la vis de fixation et qui s'appuie directement au tronçon s'étendant transversalement (30c) du longeron (30).

6. Dispositif selon l'une des revendications précédentes, **caractérisé, en ce que** les consoles (36) assemblées au tronçon s'étendant longitudinalement (30b) du longeron (30) et/ou les consoles (38) sont réalisées en forme de coupe avec une paroi formant couvercle (36c) se rattachant aux deux parois latérales (36b) et à la paroi de base (36a).

7. Dispositif selon l'une des revendications précédentes, **caractérisé en ce qu'**il est prévu entre deux parois de base (36a, 38a) des consoles (36, 38) une ou deux tôles de renfort (44) qui sont fixées aux parois de base (36a, 38a) et éventuellement au longeron (30) et qui sont positionnées à l'intérieur du point d'articulation (14a).

8. Dispositif selon la revendication 7, **caractérisé en ce que** des collerettes repliées à angle droit et soudées aux parois de base (36a, 38a) et éventuellement aux longerons (30) sont conçues sur la zone de renfort (44).
